# EUROPÄISCHE PATENTANMELDUNG

(11) **EP 4 729 813 A1**
(43) Veröffentlichungstag der Anmeldung: **22.04.2026**
(21) Anmeldenummer: 25208883.6
(22) Anmeldetag: 15.10.2025
(51) Int. Cl.: F16K 11/087

(54) **VENTILANORDNUNG UND FLÜSSIGKEITSAUFBEREITUNGSANLAGE FÜR EINE FAHRZEUGWASCHANLAGE**

(30) Priorität: 15.10.2024 DE 102024129898
(71) Anmelder: WashTec Holding GmbH, 86153 Augsburg (DE)
(72) Erfinder: MAYER, Stefan, 86356 Neusäß (DE)
(74) Vertreter: Meissner Bolte Partnerschaft mbB

(57) **Zusammenfassung**

Die vorliegende Erfindung betrifft eine Ventilanordnung 1. Die Ventilanordnung 1 umfasst ein Gehäuse 2, das einen zentralen Anschluss 5 und zumindest drei weitere Anschlüsse 6-1, 6-2, 6-3 aufweist und einen Gehäusehohlraum umschließt, in dem ein Ventilkörper 3 um eine betätigbare Einstellachse A relativ zum Gehäuse 2 drehbar angeordnet ist. Jeder der Anschlüsse 5, 6-1, 6-2, 6-3 des Gehäuses 2 steht in Fluidverbindung mit dem Gehäusehohlraum. Der Ventilkörper 3 weist zumindest drei Durchflusskanäle 8-1, 8-2, 8-3 auf, die sich jeweils von einer zugeordneten Öffnung 7-1, 7-2, 7-3 zu einem gemeinsamen Verzweigungsraum 4 erstrecken. Die Öffnungen 7-1, 7-2, 7-3 des Ventilkörpers 3 und die Anschlüsse 5, 6-1, 6-2, 6-3 des Gehäuses 2 sind so angeordnet, dass die Einstellachse A durch die erste Öffnung 5-1 verläuft und der erste Durchflusskanal 8-1 in Fluidverbindung mit dem zentralen Anschluss 5 steht. In einer ersten Winkelstellung des Ventilkörpers 3 bezüglich der Einstellachse A steht der zweite Durchflusskanal 8-2 in Fluidverbindung mit dem ersten weiteren Anschluss 6-1 und der dritte Durchflusskanal 8-3 steht in Fluidverbindung mit dem zweiten weiteren Anschluss 6-2. Des Weiteren betrifft die Erfindung eine Flüssigkeitsaufbereitungsanlage 21 für eine Fahrzeugwaschanlage 20 mit einem Flüssigkeitsreservoir 22, einer Sedimentationseinrichtung zum Abscheiden von Sediment, einer Filtereinrichtung 27 und einem Ventilsystem, das insbesondere die erfindungsgemäße Ventilanordnung 30, 31 umfasst.

## Beschreibung

Die vorliegende Erfindung betrifft eine Ventilanordnung mit einem Gehäuse, das einen zentralen Anschluss und zumindest drei weitere Anschlüsse aufweist. Das Gehäuse umschließt einen Gehäusehohlraum, in dem ein Ventilkörper um eine betätigbare Einstellachse relativ zum Gehäuse drehbar angeordnet ist. Jeder der Anschlüsse des Gehäuses steht in Fluidverbindung mit dem Gehäusehohlraum. Der Ventilkörper weist zumindest einen ersten, einen zweiten und einen dritten Durchflusskanal auf, die sich jeweils von einer ersten, einer zweiten und einer dritten zugeordneten Öffnung zu einem gemeinsamen Verzweigungsraum erstrecken. Des Weiteren betrifft die Erfindung eine Flüssigkeitsaufbereitungsanlage für eine Fahrzeugwaschanlage mit einem Flüssigkeitsreservoir für die Fahrzeugwaschanlage, einer Sedimentationseinrichtung zum Abscheiden von Sediment und einer Filtereinrichtung mit einem Einlass und einem Auslass. Die Flüssigkeitsaufbereitungsanlage weist außerdem ein Ventilsystem auf, um den Flüssigkeitsfluss in der Flüssigkeitsaufbereitungsanlage zu steuern. Das Ventilsystem umfasst insbesondere die erfindungsgemäße Ventilanordnung.

In einer Fahrzeugwaschanlage, beispielsweise einer Portalwaschanlage oder einer Waschstraße, wird das Waschwasser nach der Fahrzeugwäsche gesammelt, aufbereitet und erneut für den Waschvorgang als Brauchwasser bereitgestellt. Für die Aufbereitung des Waschwassers wird eine Flüssigkeitsaufbereitungsanlage verwendet, bei der Brauchwasser durch eine Filtereinrichtung gepumpt wird. Um die Flüssigkeitsströme in der Flüssigkeitsaufbereitungsanlage zu steuern, wird ein Ventilsystem verwendet.

In der DE 10 2018 105 678 A1 wird eine Anlage zur Aufbereitung von Brauchwasser beschrieben. Die Anlage umfasst ein Speicherbecken, aus dem Brauchwasser über eine Filteranordnung in einen Vorlagebehälter gefördert wird, aus dem Waschwasser zu der Fahrzeugwaschanlage abziehbar ist. Zum Steuern der Flüssigkeitsströme ist eine Ventilbatterie vorgesehen. Die Ventilbatterie kann die Strömung des Brauchwassers durch die Filtereinrichtung steuern. Ferner kann durch die Ventilbatterie die Strömungsrichtung umgekehrt werden, um festgesetzte Verunreinigungen aus der Filtereinrichtung durch Rückspülung zu entfernen. Außerdem kann die Filterbatterie an eine Reinwasserabgabeleitung angeschlossen sein, wenn es sich um ein geschlossenes Beckensystem handelt.

Nachteilig an den in Flüssigkeitsaufbereitungsanlagen verwendeten Ventilsystemen und Ventilanordnungen ist, dass die Anschlussmöglichkeiten begrenzt und die Schaltzeiten zu lang sind.

Entsprechend liegt der vorliegenden Erfindung die Aufgabe zugrunde, eine Ventilanordnung und eine Flüssigkeitsaufbereitungsanlage der eingangs genannten Art bereitzustellen, die flexible Anschlussmöglichkeiten für die Flüssigkeitsströmungen aufweisen und bei denen zwischen verschiedenen Flüssigkeitsströmungen schnell umgeschaltet werden kann.

Erfindungsgemäß wird diese Aufgabe durch eine Ventilanordnung mit den Merkmalen des Anspruchs 1 sowie eine Flüssigkeitsaufbereitungsanlage mit den Merkmalen des Anspruchs 8 gelöst. Vorteilhafte Ausgestaltungen und Weiterbildungen ergeben sich aus den abhängigen Ansprüchen.

Die erfindungsgemäße Ventilanordnung umfasst ein Gehäuse, das einen zentralen Anschluss und zumindest drei weitere Anschlüsse aufweist und einen Gehäusehohlraum umschließt, in dem ein Ventilkörper um eine betätigbare Einstellachse relativ zum Gehäuse drehbar angeordnet ist. Jeder der Anschlüsse des Gehäuses steht in Fluidverbindung mit dem Gehäusehohlraum. Der Ventilkörper weist zumindest einen ersten, einen zweiten und einen dritten Durchflusskanal auf, die sich jeweils von einer ersten, einer zweiten und einer dritten zugeordneten Öffnung zu einem gemeinsamen Verzweigungsraum erstrecken. Die Öffnungen des Ventilkörpers und die Anschlüsse des Gehäuses sind so angeordnet, dass die Einstellachse durch die erste Öffnung verläuft und der erste Durchflusskanal in Fluidverbindung mit dem zentralen Anschluss steht. In einer ersten Winkelstellung des Ventilkörpers bezüglich der Einstellachse steht der zweite Durchflusskanal in Fluidverbindung mit einem ersten der zumindest drei weiteren Anschlüsse und der dritte Durchflusskanal steht in Fluidverbindung mit einem zweiten der zumindest drei weiteren Anschlüsse.

Die Ventilanordnung weist vorteilhafterweise sehr flexible Anschlussmöglichkeiten auf. Es ist möglich, dass nicht nur zwei Anschlüsse des Gehäuses durch den Ventilkörper in Fluidverbindung gebracht werden, sondern es können auch drei Anschlüsse des Gehäuses über den Ventilkörper in Fluidverbindung gebracht werden. Hierdurch ist es möglich, sehr variable Strömungskreisläufe insbesondere in einer Flüssigkeitsaufbereitungsanlage bereitzustellen. Ferner ist es durch die Ausgestaltung des Ventilkörpers möglich, sehr schnell zwischen verschiedenen Fluidverbindungen der Anschlüsse des Gehäuses umzuschalten.

Gemäß einer Ausgestaltung der Ventilanordnung steht in einer zweiten Winkelstellung des Ventilkörpers bezüglich der Einstellachse der zweite Durchflusskanal in Fluidverbindung mit dem zweiten Anschluss und der dritte Durchflusskanal in Fluidverbindung mit einem dritten der zumindest drei weiteren Anschlüsse.

Gemäß einer noch weiteren Ausgestaltung steht in einer dritten Winkelstellung des Ventilkörpers bezüglich der Einstellachse der zweite Durchflusskanal in Fluidverbindung mit dem dritten Anschluss und der dritte Durchflusskanal ist durch den Ventilkörper gesperrt.

Schließlich ist in einer vierten Winkelstellung des Ventilkörpers bezüglich der Einstellachse der zweite Durchflusskanal durch den Ventilkörper gesperrt und der dritte Durchflusskanal steht in Fluidverbindung mit dem ersten Anschluss.

Durch die verschiedenen Winkelstellungen des Ventilkörpers innerhalb des Gehäuses lassen sich sehr flexibel und schnell verschiedene Anschlüsse des Gehäuses miteinander verbinden, sodass sich verschiedene Fluidverbindungen zwischen den Anschlüssen ergeben.

Gemäß einer weiteren Ausgestaltung der Ventilanordnung stehen die Achsen der Durchflusskanäle jeweils senkrecht aufeinander, wobei die Achse des ersten Durchflusskanals auf der Einstellachse liegt. Unter einer Achse wird in diesem Fall eine Gerade innerhalb des jeweiligen Durchflusskanals verstanden. Bei einem zylindrischen Durchflusskanal fällt die Achse mit der Achse des Zylinders zusammen.

Vorteilhafterweise ist in diesem Fall in jeder Winkelstellung des Ventilkörpers relativ zum Gehäuse der erste Durchflusskanal mit dem zentralen Anschluss des Gehäuses verbunden. Durch eine Drehung des Ventilkörpers um die Einstellachse können dann die senkrecht aufeinander stehenden weiteren Durchflusskanäle so zu den weiteren Anschlüssen des Gehäuses ausgerichtet werden, dass eine Fluidverbindung zu einem oder zwei der weiteren Anschlüsse hergestellt wird oder der Durchfluss durch den Durchflusskanal gesperrt wird.

Gemäß einer weiteren Ausgestaltung der Ventilanordnung ist der Gehäusehohlraum eine Hohlkugel und der Ventilkörper ist kugelförmig, sodass der kugelförmige Ventilkörper dichtend in der von dem Gehäuse gebildeten Hohlkugel sitzt. Vorteilhafterweise kann diese Ausgestaltung des Gehäuses und des Ventilkörpers besonders passgenau hergestellt werden, um insbesondere eine dichte Anordnung des Ventilkörpers innerhalb des Gehäuses zu gewährleisten. Außerdem ist diese Ausgestaltung vorteilhaft für die Drehung des Ventilkörpers um die Einstellachse innerhalb des Gehäuses.

Gemäß einer anderen Ausgestaltung ist der Gehäusehohlraum ein Hohlzylinder, dessen Achse insbesondere mit der Einstellachse zusammenfällt. Der Ventilkörper ist in diesem Fall zylinderförmig, sodass der zylinderförmige Ventilkörper dichtend in dem von dem Gehäuse gebildeten Hohlzylinder sitzt. Auch bei dieser Ausgestaltung lässt sich der Ventilkörper um die Einstellachse in dem Gehäuse so drehen, dass der Ventilkörper dicht im Gehäusehohlraum des Gehäuses sitzt und sich gleichzeitig sehr einfach und schnell um die Einstellachse drehen lässt, um verschiedene Schaltstellungen der Ventilanordnung bereitzustellen.

Die erfindungsgemäße Flüssigkeitsaufbereitungsanlage für eine Fahrzeugwaschanlage umfasst ein Flüssigkeitsreservoir für die Fahrzeugwaschanlage, eine Sedimentationseinrichtung zum Abscheiden von Sediment und eine Filtereinrichtung mit einem Einlass und einem Auslass. Ferner umfasst die Flüssigkeitsaufbereitungsanlage ein Ventilsystem, welches in einer ersten Schaltstellung Flüssigkeit von der Sedimentationseinrichtung in den Einlass der Filtereinrichtung, durch die Filtereinrichtung und von dem Auslass der Filtereinrichtung in das Flüssigkeitsreservoir leitet und in einer zweiten Schaltstellung Flüssigkeit von der Sedimentationseinrichtung an der Filtereinrichtung vorbei einer Behandlungsanlage zuführt.

Bei der Flüssigkeitsaufbereitungsanlage wird in der ersten Schaltstellung die Flüssigkeit gefiltert dem Flüssigkeitsreservoir zugeführt, sodass sie als Brauchwasser von der Fahrzeugwaschanlage verwendet werden kann. Vorteilhafterweise stellt das Ventilsystem eine zweite Schaltstellung bereit, bei welcher die Flüssigkeit nicht durch die Filtereinrichtung hindurch geführt wird, sondern von der Sedimentationseinrichtung direkt einer Behandlungsanlage zugeführt wird. Es wird somit eine Zirkulation an der Filtereinrichtung vorbei bereitgestellt, die es ermöglicht, die der Sedimentationseinrichtung entnommene Flüssigkeit einer separaten Behandlung zuzuführen, wobei der Flüssigkeitsstrom von demselben Ventilsystem bereitgestellt wird, welches auch das Filtern der Flüssigkeit vor dem Zuführen in das Flüssigkeitsreservoir steuert.

In der zweiten Schaltstellung des Ventilsystems erfolgt vorteilhafterweise eine drucklose Zirkulation, da die Flüssigkeit an der Filtereinrichtung vorbeigeführt wird. Es müssen in diesem Fall nur die Leitungswiderstände überwunden werden. Wenn die Flüssigkeit ohne Durchtritt durch die Filtereinrichtung umgewälzt wird, kann vorteilhafterweise die Umwälzgeschwindigkeit des Beckensystems erhöht werden und die Filtereinrichtung muss seltener rückgespült werden.

Gemäß einer Ausgestaltung der Flüssigkeitsaufbereitungsanlage weist die Sedimentationseinrichtung ein Sedimentationsbecken und ein Entnahmebecken auf, wobei ein Ablauf des Sedimentationsbeckens in Fluidverbindung mit dem Entnahmebecken steht.

Das Sedimentationsbecken ist insbesondere so ausgebildet, dass sich Feststoffpartikel, welche von der zugeführten Flüssigkeit, das heißt insbesondere dem Schmutzwasser der Fahrzeugwaschanlage, mitgeführt werden, absetzen. Das Sedimentationsbecken kann beispielsweise Teil eines so genannten Schlammabscheiders sein.

Bei der Behandlungsanlage kann es sich beispielsweise um eine Einrichtung zur Ozonisierung oder zur chemischen Behandlung der Flüssigkeit handeln. Ferner kann es sich bei der Behandlungsanlage um einen Bioreaktor handeln. Die von der Behandlungsanlage behandelte Flüssigkeit kann beispielsweise der Sedimentationseinrichtung wieder zugeführt werden. Alternativ kann die behandelte Flüssigkeit auch aus der Flüssigkeitsaufbereitungsanlage heraus abgeführt werden.

Gemäß einer Ausgestaltung der Flüssigkeitsaufbereitungsanlage weist das Ventilsystem eine erste Ventilanordnung auf, wie sie vorstehend beschrieben wurde. In diesem Fall ist insbesondere der zentrale Anschluss der ersten Ventilanordnung mit dem Einlass der Filtereinrichtung verbunden. Vorteilhafterweise besteht somit immer eine Fluidverbindung von dem Einlass der Filtereinrichtung zu dem Verzweigungsraum innerhalb des Ventilkörpers. Über den Ventilkörper kann dann eine Fluidverbindung zu einem oder mehreren der weiteren Anschlüsse des Gehäuses der ersten Ventilanordnung hergestellt werden.

Gemäß einer Ausgestaltung der Flüssigkeitsaufbereitungsanlage ist der erste Anschluss der ersten Ventilanordnung mit der Sedimentationseinrichtung verbunden. Der erste Anschluss ist insbesondere mit dem Entnahmebecken verbunden.

Der zweite Anschluss der ersten Ventilanordnung ist insbesondere mit der Behandlungsanlage verbunden. Der dritte Anschluss der ersten Ventilanordnung kann auch mit der Sedimentationseinrichtung verbunden sein, insbesondere mit dem Sedimentationsbecken.

Gemäß einer weiteren Ausgestaltung der Flüssigkeitsaufbereitungsanlage weist das Ventilsystem eine zweite Ventilanordnung wie sie vorstehend beschrieben wurde auf. Das Ventilsystem weist somit insbesondere eine erste und eine zweite Ventilanordnung auf, die jeweils so ausgebildet sind, wie es vorstehend beschrieben wurde.

Der zentrale Anschluss der zweiten Ventilanordnung ist insbesondere mit dem Auslass der Filtereinrichtung verbunden. Vorteilhafterweise besteht somit bei jeder Winkelstellung des Ventilkörpers der zweiten Ventilanordnung eine Fluidverbindung von dem Auslass der Filteranordnung zu dem Verzweigungsraum, von dem aus Fluidverbindungen zu den weiteren Anschlüssen in Abhängigkeit von der Winkelstellung des Ventilkörpers hergestellt werden können.

Der erste Anschluss der zweiten Ventilanordnung ist insbesondere mit dem Flüssigkeitsreservoir verbunden.

Der zweite Anschluss der zweiten Ventilanordnung ist insbesondere mit der Sedimentationseinrichtung verbunden. Insbesondere ist der zweite Anschluss der zweiten Ventilanordnung mit dem Sedimentationsbecken verbunden.

Der dritte Anschluss der zweiten Ventilanordnung ist insbesondere auch mit der Sedimentationseinrichtung verbunden. In diesem Fall ist er jedoch insbesondere mit dem Entnahmebecken verbunden.

Bei der Ausgestaltung der Flüssigkeitsaufbereitungsanlage mit den beiden vorstehend beschriebenen Ventilanordnungen ergibt sich der Vorteil, dass durch die verschiedenen Winkelstellungen der Ventilkörper der Ventilanordnungen folgende Strömungswege für die Flüssigkeit schnell geschaltet werden können:
Bei einem Strömungsweg zum Filtern kann die Flüssigkeit dem Entnahmebecken entnommen werden, dann durch die Filtereinrichtung strömen und danach dem Flüssigkeitsreservoir zugeführt werden.

Bei einem Strömungsweg zum Rückspülen kann die Flüssigkeit dem Entnahmebecken entnommen werden, dann in den Filterauslass strömen, um von dort die Filtereinrichtung umgekehrt zur Filterströmung zum Filtereinlass zu strömen und vom Filtereinlass in das Sedimentationsbecken strömen. Vorteilhafterweise werden bei einem solchen Rückspülen Schmutzteilchen in der Filtereinrichtung aufgewirbelt und dem Sedimentationsbecken zugeführt, in dem sich die Schmutzteilchen absetzen können. Gleichzeitig wird bei einem solchen Rückspülen das Filtermaterial, beispielsweise der Sand oder Kies, aufgewirbelt.

Bei einem Strömungsweg zum Verdichten kann das nach dem Rückspülen aufgewirbelte Filtermaterial wieder im Filterbett verdichtet werden. In diesem Fall strömt die Flüssigkeit von dem Entnahmebecken durch die Filtereinrichtung. In diesem Fall wird vorteilhafterweise in der zweiten Ventileinrichtung der Anschluss zum Flüssigkeitsreservoir und zum Sedimentationsbecken offengeschaltet. Beim Flüssigkeitsreservoir ergibt sich jedoch ein Gegendruck, sodass die Flüssigkeit in diesem Fall nur zurück in das Sedimentationsbecken geführt wird. Sie zirkuliert somit in der Flüssigkeitsaufbereitungsanlage, wobei sie das Filterbett der Filtereinrichtung vorteilhafterweise wieder verdichtet.

Bei einem Strömungsweg zur Zirkulation strömt die Flüssigkeit vorteilhafterweise vom Entnahmebecken sowohl zur ersten Ventilanordnung als auch zur zweiten Ventilanordnung. Bei den Ventilanordnungen ist jeweils der Durchgang zur Filtereinrichtung offen, sodass sowohl der Filtereinlass als auch der Filterauslass mit Druck beaufschlagt werden. In diesem Fall tritt vorteilhafterweise im Ergebnis keine Flüssigkeit durch die Filtereinrichtung durch. Stattdessen strömt die Flüssigkeit von einer Zirkulationsleitung in die Behandlungsanlage, in welcher sie wie vorstehend beschrieben behandelt werden kann. Vorteilhafterweise handelt es sich hierbei um ein druckloses Zirkulieren, da die Flüssigkeit nicht durch die Filtereinrichtung hindurch geführt wird, wodurch Energie beim Betrieb der Flüssigkeitsaufbereitungsanlage eingespart werden kann.

Schließlich können die Ventilanordnungen auch so geschaltet werden, dass alle Durchgänge geschlossen sind.

Die in dieser Schrift verwendeten Begriffe "erste", "zweite", "dritte", usw. sind so zu verstehen, dass hierdurch zwischen verschiedenen Elementen unterschieden wird. Die Anzahl dieser Elemente soll hierdurch nicht eingeschränkt werden. Diese Begriffe werden nur verwendet, um ein Element von einem anderen Element zu unterscheiden. So könnte zum Beispiel ein erster Anschluss, wie er hier beschrieben ist, als zweiter Anschluss bezeichnet werden, ohne dass dies von der Lehre der vorliegenden Erfindung abweicht. Wenn somit in einer Ausführungsform ein zweites Element angegeben ist, kann ein erstes Element vorhanden sein oder nicht.

Die Erfindung wird nun anhand von Ausführungsbeispielen mit Bezug zu den Zeichnungen erläutert.
- Figur 1: zeigt ein Ausführungsbeispiel der Ventilanordnung,
- Figur 2: zeigt das Gehäuse der in Figur 1 gezeigten Ventilanordnung,
- Figur 3: zeigt den Ventilkörper der Ventilanordnung der Figur 1,
- Figuren 4A bis 4D: veranschaulichen verschiedene Winkelstellungen des Ventilkörpers in dem Gehäuse der Ventilanordnung,
- Figur 5: zeigt schematisch ein Ausführungsbeispiel der Flüssigkeitsaufbereitungsanlage,
- Figuren 6 bis 10: veranschaulichen verschiedene Schaltstellungen der Ventilanordnungen der Flüssigkeitsaufbereitungsanlage der Figur 5.

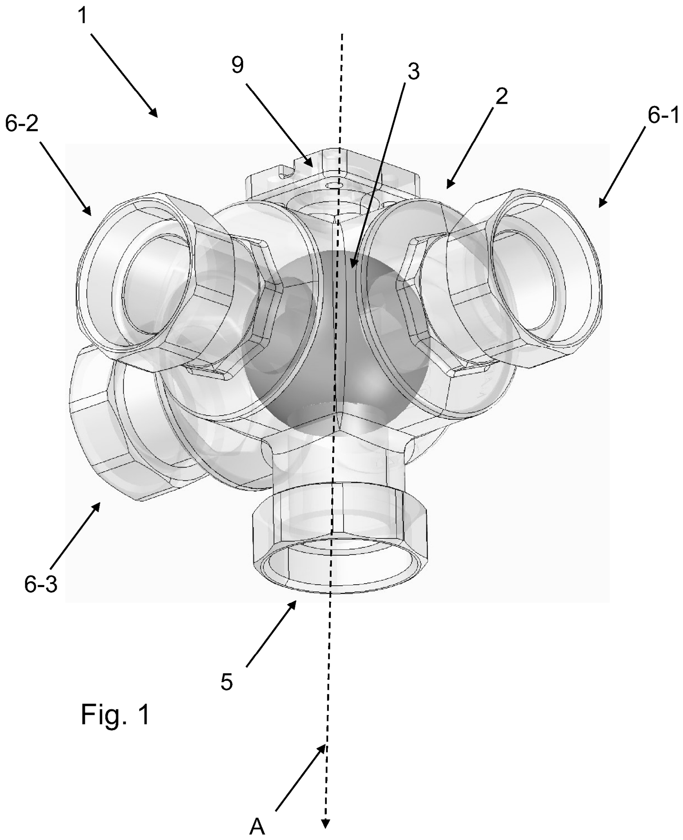

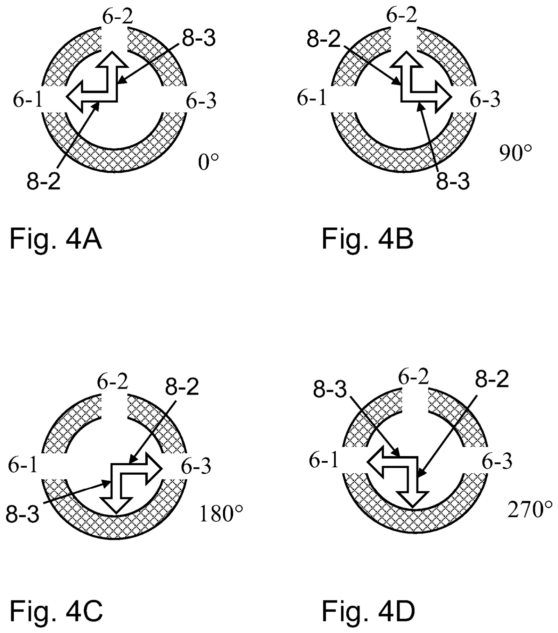

Zunächst wird ein Ausführungsbeispiel der Ventilanordnung 1 mit Bezug zu den Figuren 1 bis 4 (Figuren 4A bis 4D) beschrieben:
Die Ventilanordnung 1 umfasst ein Gehäuse 2 mit mehreren Anschlüssen und einem Ventilkörper 3, der dicht in einem Gehäusehohlraum im Inneren des Gehäuses 2 gelagert ist, wie es in Figur 1 gezeigt ist. Ferner weist das Gehäuse 2 eine Betätigungsvorrichtung 9 auf, mittels welcher manuell oder elektronisch der Ventilkörper 3 innerhalb des Gehäuses um eine Einstellachse A drehbar ist, um Fluidverbindungen zwischen Anschlüssen des Gehäuses 2 herzustellen, wie es später im Detail erläutert wird.

Das Gehäuse 2 weist einen zentralen Anschluss 5 auf. Die Einstellachse A liegt innerhalb des zentralen Anschlusses 5 und der Verbindung des zentralen Anschlusses 5 zum Gehäusehohlraum, in welchem der Ventilkörper 3 aufgenommen ist.

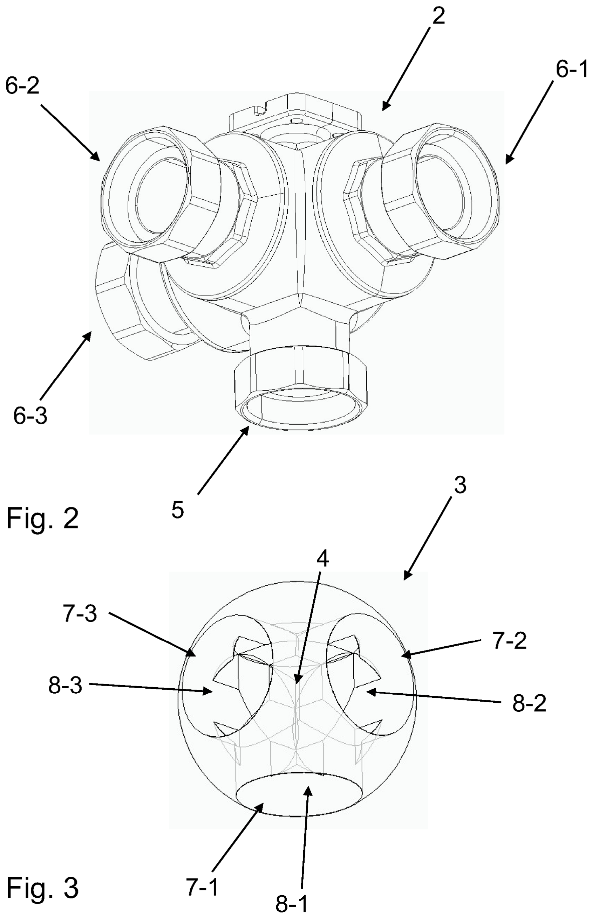

In einer zur Einstellachse A senkrechten Ebene sind ein erster, ein zweiter und ein dritter weiterer Anschluss 6-1, 6-2, 6-3 angeordnet. Dabei schließt im vorliegenden Ausführungsbeispiel die Achse vom Mittelpunkt des Gehäusehohlraums zum ersten weiteren Anschluss 6-1 mit der Achse vom Mittelpunkt des Gehäusehohlraums zum zweiten weiteren Anschluss 6-2 einen Winkel von 90° ein, die Achse vom Mittelpunkt des Gehäusehohlraums zum zweiten weiteren Anschluss 6-2 schließt mit der Achse vom Mittelpunkt des Gehäusehohlraums zum dritten weiteren Anschluss 6-3 auch einen Winkel von 90° ein und die Achse des ersten weiteren Anschlusses 6-1 und die Achse des dritten weiteren Anschlusses 6-3 schließen einen Winkel von 180° ein. Die Anschlüsse des Gehäuses, das heißt der zentrale Anschluss 5 und die drei weiteren Anschlüsse 6-1 bis 6-3 sind in ihrer Anordnung gemäß dem Ausführungsbeispiel in den Figuren 1 und 2 gezeigt.

Bei einem anderen Ausführungsbeispiel schließen die Achsen der drei weiteren Anschlüsse 6-1 bis 6-3 jeweils einen Winkel von 120° ein. Bei noch weiteren Ausführungsbeispielen sind noch weitere Winkelstellungen der weiteren Anschlüsse möglich, die auch nicht notwendigerweise in einer Ebene angeordnet sind.

Die Anschlüsse 5, 6-1, 6-2, 6-3 des Gehäuses 2 stehen in Fluidverbindung mit dem Gehäusehohlraum, in dem der Ventilkörper 3 aufgenommen ist. Der Ventilkörper 3 kann dabei je nach Winkelstellung einen Anschluss sperren oder einen Durchfluss zu einem anderen Anschluss ermöglichen, wie es im Folgenden beschrieben wird.

Der Ventilkörper 3 ist im Detail in Figur 3 gezeigt. Er weist einen ersten Durchflusskanal 8-1, einen zweiten Durchflusskanal 8-2 und einen dritten Durchflusskanal 8-3 auf. Die Durchflusskanäle 8-1 bis 8-3 münden im Inneren des Ventilkörpers 3 in einem Verzweigungsraum 4, der eine Fluidverbindung der Durchflusskanäle 8-1 bis 8-3 herstellt. Am anderen Ende münden die Durchflusskanäle 8-1 bis 8-3 jeweils in Öffnungen des Ventilkörpers 3, das heißt in eine erste Öffnung 7-1, eine zweite Öffnung 7-2 und eine dritte Öffnung 7-3.

Die äußere Oberfläche des Ventilkörpers 3 weist die Form einer Kugel auf, welche nur von den Öffnungen 7-1 bis 7-3 unterbrochen ist. Korrespondierend zu der Kugelform des Ventilkörpers 3 ist der Gehäusehohlraum im Inneren des Gehäuses 2 als Hohlkugel ausgebildet, sodass in der Ventilanordnung 1 der Ventilkörper 3 so von dem Gehäuse 2 im Gehäusehohlraum aufgenommen ist, dass der Ventilkörper 3 um die Einstellachse A mittels der Betätigungsvorrichtung 9 drehbar ist, die Oberfläche des Ventilkörpers 3 jedoch so im Gehäusehohlraum sitzt, dass eine flüssigkeitsdichte Verbindung geschaffen wird. Es ist somit nicht möglich, dass Flüssigkeit von einem der Durchflusskanäle 8-1 bis 8-3 zwischen der Oberfläche des Ventilkörpers 3 und der inneren Oberfläche des Gehäusehohlraums des Gehäuses 2 zu einem anderen der Durchflusskanäle 8-1 bis 8-3 gelangt.

Ferner sitzt der Ventilkörper 3 so in dem Gehäusehohlraum des Gehäuses 2, dass die Einstellachse A durch die erste Öffnung 7-1 und durch den ersten Durchflusskanal 8-1 verläuft. Unabhängig von der Winkelstellung des Ventilkörpers 3 besteht somit immer eine Fluidverbindung von dem zentralen Anschluss 5 des Gehäuses 2 durch die erste Öffnung 7-1 des Ventilkörpers 3, durch den ersten Durchflusskanal 8-1 in den Verzweigungsraum 4 des Ventilkörpers 3. Durch verschiedene Winkelstellungen des Ventilkörpers 3 können Fluidverbindungen der ersten und zweiten Öffnung 7-1, 7-2 des Ventilkörpers 3 mit den weiteren Anschlüssen 6-1 bis 6-3 des Gehäuses 2 hergestellt werden. Die Achsen der Durchflusskanäle 8-1 bis 8-3 stehen hierfür senkrecht aufeinander, wobei die Achse des ersten Durchflusskanals 8-1 mit der Einstellachse A zusammenfällt.

In den Figuren 4A bis 4D sind die verschiedenen Winkelstellung des Ventilkörpers 3 bezüglich der Einstellachse A innerhalb des Gehäuses 2 dargestellt. Bei den Darstellungen der Figuren 4A bis 4D liegt der zentrale Anschluss 5 unterhalb der Zeichenebene und man blickt von oben in Richtung der Einstellachse A auf die Betätigungsvorrichtung 9.

In einer ersten Winkelstellung bezüglich der Einstellachse A, die als 0° Winkelstellung bezeichnet wird und die in Figur 4A gezeigt ist, steht der zweite Durchflusskanal 8-2 in Fluidverbindung mit dem ersten weiteren Anschluss 6-1 und der dritte Durchflusskanal 8-3 in Fluidverbindung mit dem zweiten weiteren Anschluss 6-2.

In einer zweiten Winkelstellung, die als 90° Winkelstellung bezeichnet ist und die in Figur 4B gezeigt ist, wurde der Ventilkörper 3 um die Einstellachse A um 90° im Uhrzeigersinn gedreht. Bei dieser zweiten Winkelstellung steht der zweite Durchflusskanal 8-2 in Fluidverbindung mit dem zweiten weiteren Anschluss 6-2 und der dritte Durchflusskanal 8-3 in Fluidverbindung mit dem dritten weiteren Anschluss 6-3.

In einer dritten Winkelstellung des Ventilkörpers 3, die in Figur 4C gezeigt ist und die als 180° Winkelstellung bezeichnet ist, wurde der Ventilkörper 3 nochmals um 90° im Uhrzeigersinn um die Einstellachse A gedreht, sodass der zweite Durchflusskanal 8-2 in Fluidverbindung mit dem dritten weiteren Anschluss 6-3 steht. Der dritte Durchflusskanal 8-3 ist hingegen durch das Gehäuse 2 gesperrt, wie es in Figur 4C gezeigt ist.

In einer vierten Winkelstellung, die in Figur 4D gezeigt ist und die als 270° Winkelstellung bezeichnet ist, wurde der Ventilkörper 3 um weitere 90° um die Einstellachse A gedreht, sodass in diesem Fall der zweite Durchflusskanal 8-2 durch das Gehäuse 2 gesperrt ist und der dritte Durchflusskanal 8-3 in Fluidverbindung mit dem ersten weiteren Anschluss 6-1 steht.

In einem weiteren Ausführungsbeispiel ist der Ventilkörper 3 nicht kugelförmig, sondern zylinderförmig. Entsprechend bildet der Gehäusehohlraum in diesem Fall keine Hohlkugel, sondern einen Hohlzylinder. Die erste Öffnung des Ventilkörpers ist in diesem Fall bei einer der Stirnseiten des zylinderförmigen Ventilkörpers ausgebildet und die zweite und die dritte Öffnung des Ventilkörpers ist in diesem Fall auf der Mantelfläche des zylinderförmigen Ventilkörpers ausgebildet. Der Ventilkörper kann in diesem Fall jedoch in gleicher Weise mit den Anschlüssen des Gehäuses zusammenwirken.

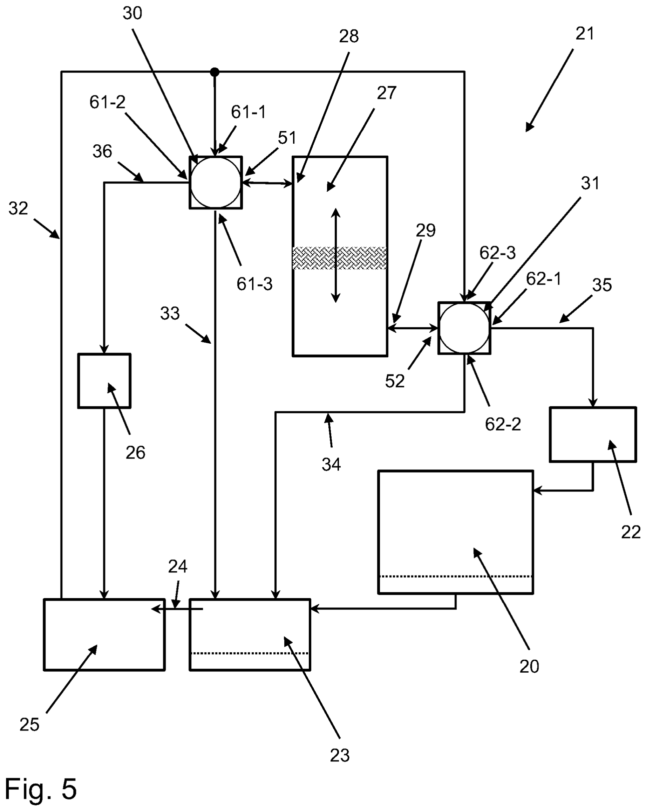

Mit Bezug zu den Figuren 5 bis 10 wird ein Ausführungsbeispiel der Flüssigkeitsaufbereitungsanlage 21 einer Fahrzeugwaschanlage 20 beschrieben:
Die Fahrzeugwaschanlage 20 besitzt eine Sammelrinne, von der das schmutzige Waschwasser einem Sedimentationsbecken 23 zugeführt wird. In dem Sedimentationsbecken 23 setzen sich Feststoffpartikel unten ab. Im oberen Bereich weist das Sedimentationsbecken 23 einen Ablauf 24 auf, über welchen das von Schmutzpartikeln befreite Waschwasser in ein Entnahmebecken 25 gelangt. Das Entnahmebecken 25 ist über eine Entnahmeleitung 32 mit einer ersten Ventilanordnung 30 und einer zweiten Ventilanordnung 31 verbunden. Im vorliegenden Ausführungsbeispiel ist der Aufbau der beiden Ventilanordnungen 30 und 31 derjenige, wie er vorstehend mit Bezug zu den Figuren 1 bis 4 für die Ventilanordnung 1 beschrieben wurde. Die Entnahmeleitung 32 ist dabei mit dem ersten weiteren Anschluss 61-1 der ersten Ventilanordnung 30 und dem dritten weiteren Anschluss 62-3 der zweiten Ventilanordnung 31 verbunden. Der zentrale Anschluss 51 der ersten Ventilanordnung 30 ist mit dem Einlass 28 einer Filtereinrichtung 27 verbunden. Der Auslass 29 der Filtereinrichtung 27 ist mit dem zentralen Anschluss 52 der zweiten Ventilanordnung 31 verbunden.

Der dritte weitere Anschluss 61-3 der ersten Ventilanordnung 30 ist über eine erste Rückführleitung 33 mit dem Sedimentationsbecken 23 verbunden. Gleichermaßen ist der zweite weitere Anschluss 62-2 der zweiten Ventilanordnung 31 über eine zweite Rückführleitung 34 mit dem Sedimentationsbecken 23 verbunden. Ferner ist der zweite weitere Anschluss 61-2 der ersten Ventilanordnung 30 über eine Zirkulationsleitung 36 mit einer Behandlungsanlage 26 verbunden. Der Auslass der Behandlungsanlage 26 ist wiederum mit dem Entnahmebecken 25 verbunden. Schließlich ist der erste weitere Anschluss 62-1 der zweiten Ventilanordnung 31 über eine Reservoirleitung 35 mit einem Flüssigkeitsreservoir 22 verbunden. Das in dem Flüssigkeitsreservoir 22 gesammelte Brauchwasser wird der Fahrzeugwaschanlage 20 zum Reinigen der Fahrzeuge zugeführt.

Für die Flüssigkeitszirkulation sind entsprechende Pumpen vorgesehen, die in Figur 5 jedoch nicht gezeigt sind.

Die erste und die zweite Ventilanordnung 30, 31 werden elektronisch über die jeweils zugeordneten Betätigungsvorrichtungen 9 der Ventilanordnungen 30, 31 angesteuert. Auf diese Weise können die Ventilkörper 3 der Ventilanordnungen 30, 31 schnell um jeweils 90° um die jeweilige Einstellachse A gedreht werden, um die Durchflusskanäle 8 der jeweiligen Ventilkörper 3 in Übereinstimmung mit den weiteren Anschlüssen 61-1 bis 61-3 und 62-1 bis 62-3 zu bringen.

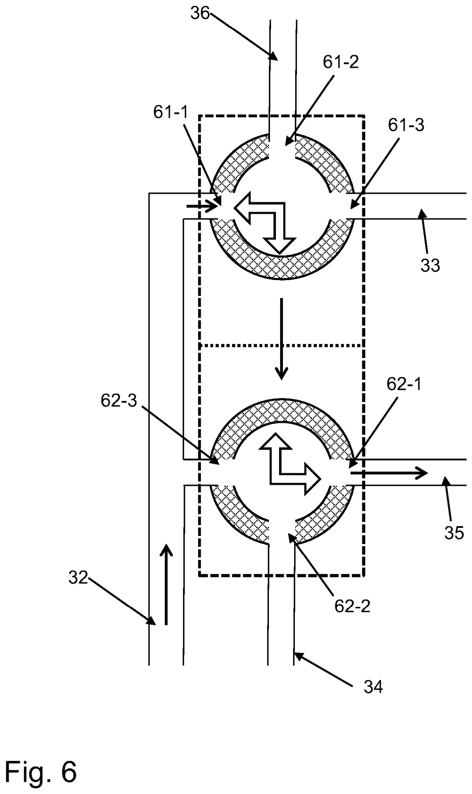

Mit Bezug zu den Figuren 6 bis 10 werden im Folgenden die verschiedenen Strömungswege erläutert, welche durch die verschiedenen Winkelstellungen der Ventilkörper der Ventilanordnungen 30 und 31 realisiert werden können. Wie bei den Figuren 4 liegt bei den Darstellungen der Figuren 6 bis 10 der zentrale Anschluss 51 bzw. 52 unterhalb der Zeichenebene und man blickt von oben in Richtung der Einstellachse A auf die jeweilige Betätigungsvorrichtung 9 der Ventilanordnung 30 bzw. 31.

Figur 6 zeigt die Winkelstellungen der Ventilkörper 3 der ersten und zweiten Ventilanordnung 30, 31 für den Strömungsweg der Flüssigkeit zum Filtern im Normalbetrieb der Flüssigkeitsaufbereitungsanlage. Der Ventilkörper 3 der ersten Ventilanordnung 30 befindet sich in der 270°-Winkelstellung. Gleichermaßen befindet sich der Ventilkörper 3 der zweiten Ventilanordnung 31 in der 270°-Winkelstellung. In diesem Fall wird die Flüssigkeit aus dem Entnahmebecken 25 durch die Entnahmeleitung 32 zu den Ventilanordnungen 30 und 31 gepumpt. Der Durchgang ist bei der zweiten Ventilanordnung 31 gesperrt. Bei der ersten Ventilanordnung 30 tritt die Flüssigkeit ein und gelangt über den dritten Durchflusskanal 8-3 des Ventilkörpers 3 in den Verzweigungsraum 4 des Ventilkörpers 3 der ersten Ventilanordnung 30. Von dort gelangt die Flüssigkeit durch den ersten Durchflusskanal 8-1 und den zentralen Anschluss 51 der ersten Ventilanordnung 30 zum Einlass 28 der Filtereinrichtung 27. Die Flüssigkeit wird dann in der Filtereinrichtung 27 gefiltert und tritt beim Auslass 29 der Filtereinrichtung 27 in den zentralen Anschluss 52 der zweiten Ventilanordnung 31 ein.

Wie aus der in Figur 6 gezeigten Stellung des Ventilkörpers 3 der zweiten Ventilanordnung 31 ersichtlich, gelangt die Flüssigkeit von dort über die Reservoirleitung 35 in das Flüssigkeitsreservoir 22. Die gefilterte Flüssigkeit kann der Fahrzeugwaschanlage 20 somit als Brauchwasser zur Verfügung gestellt werden. Nach dem Rückfluss über das Sedimentationsbecken 23 in das Entnahmebecken 25 ist der Strömungsweg zum Filtern geschlossen.

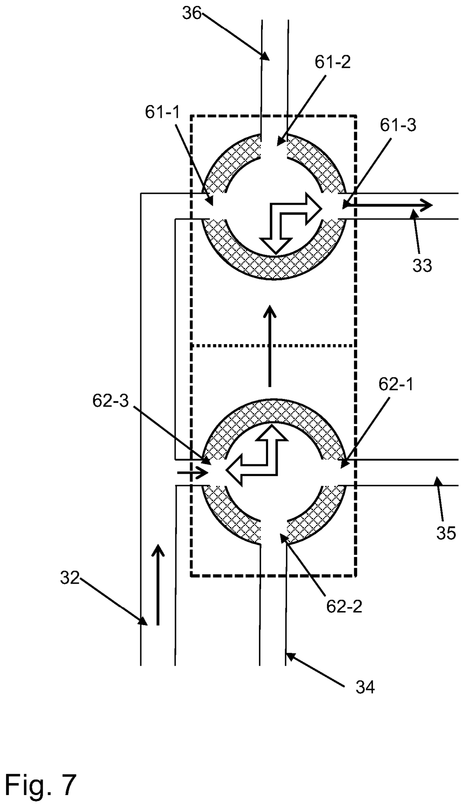

Figur 7 zeigt die Winkelstellungen der Ventilkörper 3 der ersten und zweiten Ventilanordnung 30, 31 für einen Strömungsweg der Flüssigkeit zum Rückspülen des Filters. In diesem Fall sind die Winkelstellungen der Ventilkörper 3 der ersten und zweiten Ventilanordnung 30, 31 180°, wie es in Figur 4C gezeigt ist. Bei diesen Winkelstellungen der Ventilkörper 3 wird die Flüssigkeit mittels einer Pumpe dem Entnahmebecken 25 entnommen und strömt über die Entnahmeleitung 32 zu den Ventilanordnungen 30 und 31. Der erste weitere Anschluss 61-1 der ersten Ventilanordnung 30, welcher mit der Entnahmeleitung 32 verbunden ist, ist in der Winkelstellung des Ventilkörpers 3 der ersten Ventilanordnung 30 geschlossen. Der dritte weitere Anschluss 62-3 der zweiten Ventilanordnung 31, der auch mit der Entnahmeleitung 32 verbunden ist, ist hingegen geöffnet, sodass die Flüssigkeit über den dritten weiteren Anschluss 62-3 der zweiten Ventilanordnung 31 in dieselbe einströmt und über den zentralen Anschluss 52 der zweiten Ventilanordnung 31 in umgekehrter Richtung in die Filtereinrichtung 27 einströmt. Die Flüssigkeit durchströmt die Filtereinrichtung 27 in umgekehrter Richtung, wodurch Schmutzteilchen im Filter der Filtereinrichtung 27 aufgewirbelt werden. Die Flüssigkeit gelangt dann über den zentralen Anschluss 51 der ersten Ventilanordnung 30 zu dem dritten weiteren Anschluss 61-3 der ersten Ventilanordnung 30 und in die erste Rückführleitung 33, wie es in Figur 7 gezeigt ist. Von dort gelangt die Flüssigkeit, welche die Schmutzteilchen aus dem Filter enthält, in das Sedimentationsbecken 23, wo sich die Schmutzteilchen absetzen. Die Flüssigkeit wird dann über den Ablauf 24 des Sedimentationsbeckens 23 wieder dem Entnahmebecken 25 zugeführt, wodurch der Kreislauf zum Rückspülen geschlossen wird.

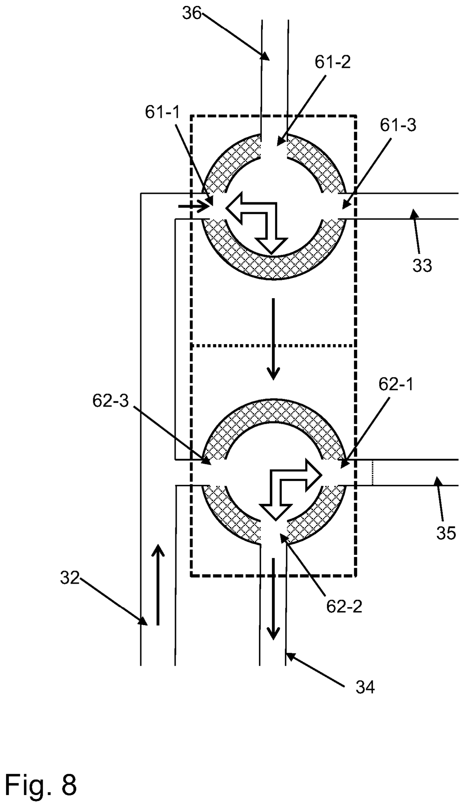

Figur 8 zeigt die Winkelstellungen der Ventilkörper 3 der ersten und zweiten Ventilanordnung 30, 31 für den Strömungsweg der Flüssigkeit zum Verdichten des Filterbetts. Der Ventilkörper 3 der ersten Ventilanordnung 30 befindet sich dabei in der 270°-Winkelstellung, wie es in Figur 4D gezeigt ist, der Ventilkörper 3 der zweiten Ventilanordnung 31 befindet sich hingegen in der 0°-Winkelstellung, wie es in Figur 4A gezeigt ist. Der durch diese Winkelstellungen der Ventilkörper 3 der Ventilanordnungen 30, 31 bereitgestellte Strömungsweg wird üblicherweise nach dem Rückspülen der Filtereinrichtung 27 gewählt.

In diesem Fall wird die Flüssigkeit aus dem Entnahmebecken 25 gepumpt. Wie in Figur 8 gezeigt, tritt sie dann über den ersten weiteren Anschluss 61-1 der ersten Ventilanordnung 30 in die erste Ventilanordnung 30 ein und gelangt von dort über den zentralen Anschluss 51 der ersten Ventilanordnung 30 in die Filtereinrichtung 27. Die Filtereinrichtung 27 wird durchströmt und gelangt vom Auslass 29 der Filtereinrichtung 27 und dem zentralen Anschluss 52 der zweiten Ventilanordnung 31 in den Verzweigungsraum 4 der zweiten Ventilanordnung 31. Von dort sind die Durchgänge bei dem ersten weiteren Anschluss 62-1 und dem zweiten weiteren Anschluss 62-2 der zweiten Ventilanordnung 31 geöffnet. Der erste weitere Anschluss 62-1 ist mit der Reservoirleitung 35 verbunden, welche in das Flüssigkeitsreservoir 22 führt. Dort ergibt sich aus der im Flüssigkeitsreservoir 22 befindlichen Flüssigkeit ein Gegendruck. Der zweite weitere Anschluss 62-2 der zweiten Ventilanordnung 31 ist hingegen mit der zweiten Rückführleitung 34 verbunden, welche in das Sedimentationsbecken 23 führt. Bei diesem zweiten weiteren Anschluss 62-2 ergibt sich kein Gegendruck, sodass die Flüssigkeit nur zurück ins Sedimentationsbecken 23 strömt. Von dort gelangt sie wieder ins Entnahmebecken 25. Die Flüssigkeit zirkuliert somit, ohne über das Flüssigkeitsreservoir 22 in die Fahrzeugwaschanlage 20 zu gelangen, durch die Filtereinrichtung 27 und verdichtet dabei das Filterbett.

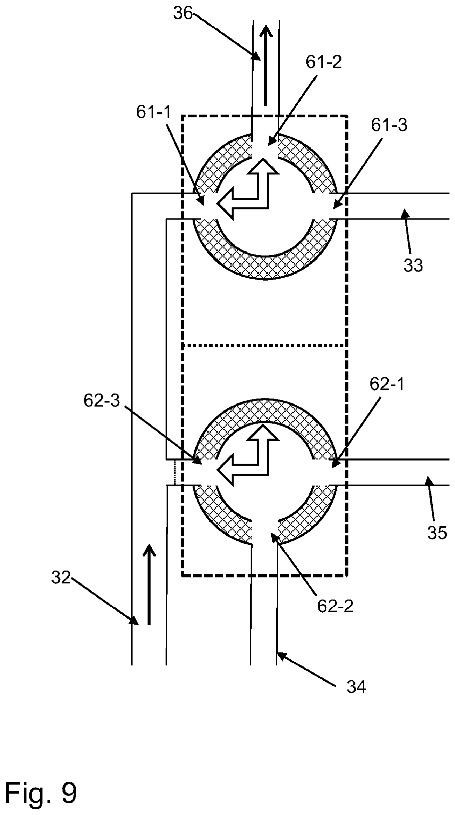

Figur 9 zeigt die Winkelstellungen der Ventilkörper 3 der ersten und zweiten Ventilanordnung 30, 31 für einen Strömungsweg zur Zirkulation durch die Behandlungsanlage 26. In diesem Fall ist die Winkelstellung des Ventilkörpers 3 der ersten Ventilanordnung 30 die 0°-Winkelstellung und der Ventilkörper 3 der zweiten Ventilanordnung 31 befindet sich in der 180°-Winkelstellung.

In diesem Fall wird Flüssigkeit aus dem Entnahmebecken 25 über die Entnahmeleitung 32 zu den Ventilanordnungen 30, 31 gepumpt. Einerseits über den ersten weiteren Anschluss 61-1 der ersten Ventilanordnung 30 und andererseits über den dritten weiteren Anschluss 62-3 der zweiten Ventilanordnung 31 ist der Durchfluss zu sowohl dem Einlass 28 der Filtereinrichtung 27 als auch dem Auslass 29 der Filtereinrichtung 27 geöffnet; siehe Figur 9. Es wird somit sowohl der Einlass 28 als auch der Auslass 29 der Filtereinrichtung 27 mit Druck beaufschlagt. Im Ergebnis tritt daher keine Flüssigkeit durch die Filtereinrichtung 27 durch. Stattdessen strömt die Flüssigkeit über den zweiten weiteren Anschluss 61-2 der ersten Ventilanordnung 30 in die Zirkulationsleitung 36 und von dort in die Behandlungsanlage 26. Von der Behandlungsanlage 26 strömt die Flüssigkeit zurück in das Entnahmebecken 25, wodurch der Kreislauf geschlossen wird. Bei diesen Winkelstellungen der Ventilkörper 3 der ersten und zweiten Ventilanordnungen 30, 31 zirkuliert die Flüssigkeit somit durch die Behandlungsanlage 26, ohne die Filtereinrichtung 27 und ohne die Fahrzeugwaschanlage 20 zu durchströmen. Die Flüssigkeit kann auf diese Weise einer Behandlung, wie einer Ozonisierung, einer chemischen Behandlung oder der Behandlung in einem Bioreaktor unterzogen werden. Die Zirkulation selbst erfolgt dabei drucklos, da die Filtereinrichtung 27 nicht durchströmt wird und nur die Leitungswiderstände überwunden werden müssen.

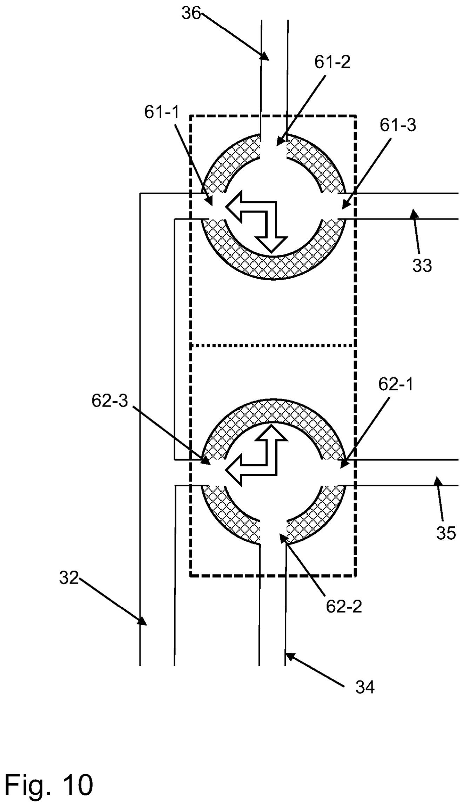

In Figur 10 sind schließlich Winkelstellungen der Ventilkörper 3 der Ventilanordnungen 30 und 31 gezeigt, bei denen alle Durchgänge geschlossen sind. Der Ventilkörper 3 der ersten Ventilanordnung 30 befindet sich in der 270°-Winkelstellung, der Ventilkörper 3 der zweiten Ventilanordnung 31 befindet sich in der 180°-Winkelstellung. Wie bei dem in Figur 9 gezeigten Strömungsweg wird in diesem Fall sowohl der Einlass 28 als auch der Auslass 29 der Filtereinrichtung 27 mit Druck beaufschlagt, sodass im Ergebnis keine Flüssigkeit durch die Filtereinrichtung 27 strömt. Ein weiterer Durchfluss ist durch die Ventilanordnungen 30, 31 nicht möglich, wie es in Figur 10 gezeigt ist, sodass sich keine Flüssigkeitsströmung ergibt.

### Bezugszeichenliste

- 1: Ventilanordnung
- 2: Gehäuse
- 3: Ventilkörper
- 4: Verzweigungsraum
- 5: zentraler Anschluss
- 6-1: erster weiterer Anschluss
- 6-2: zweiter weiterer Anschluss
- 6-3: dritter weiterer Anschluss
- 7-1: erste Öffnung des Ventilkörpers
- 7-2: zweite Öffnung des Ventilkörpers
- 7-3: dritte Öffnung des Ventilkörpers
- 8-1: erster Durchflusskanal
- 8-2: zweiter Durchflusskanal
- 8-3: dritter Durchflusskanal
- 9: Betätigungsvorrichtung
- 20: Fahrzeugwaschanlage
- 21: Flüssigkeitsaufbereitungsanlage
- 22: Flüssigkeitsreservoir
- 23: Sedimentationsbecken
- 24: Ablauf des Sedimentationsbeckens
- 25: Entnahmebecken
- 26: Behandlungsanlage
- 27: Filtereinrichtung
- 28: Einlass der Filtereinrichtung
- 29: Auslass der Filtereinrichtung
- 30: erste Ventilanordnung
- 31: zweite Ventilanordnung
- 32: Entnahmeleitung
- 33: erste Rückführleitung
- 34: zweite Rückführleitung
- 35: Reservoirleitung
- 36: Zirkulationsleitung
- 51: zentraler Anschluss der ersten Ventilanordnung
- 52: zentraler Anschluss der zweiten Ventilanordnung
- 61-1: erster weiterer Anschluss der ersten Ventilanordnung
- 61-2: zweiter weiterer Anschluss der ersten Ventilanordnung
- 61-3: dritter weiterer Anschluss der ersten Ventilanordnung
- 62-1: erster weiterer Anschluss der zweiten Ventilanordnung
- 62-2: zweiter weiterer Anschluss der zweiten Ventilanordnung
- 62-3: dritter weiterer Anschluss der zweiten Ventilanordnung

## Patentansprüche

1. Ventilanordnung (1) mit
einem Gehäuse (2), das einen zentralen Anschluss (5) und zumindest drei weitere Anschlüsse (6-1, 6-2, 6-3) aufweist und einen Gehäusehohlraum umschließt, in dem ein Ventilkörper (3) um eine betätigbare Einstellachse relativ zum Gehäuse (2) drehbar angeordnet ist,
wobei jeder der Anschlüsse (5, 6-1, 6-2, 6-3) des Gehäuses (2) in Fluidverbindung mit dem Gehäusehohlraum steht und
wobei der Ventilkörper (3) zumindest einen ersten, einen zweiten und einen dritten Durchflusskanal (8-1, 8-2, 8-3) aufweist, die sich jeweils von einer ersten, einer zweiten und einer dritten zugeordneten Öffnung (7-1, 7-2, 7-3) zu einem gemeinsamen Verzweigungsraum (4) erstrecken,
**dadurch gekennzeichnet, dass**
die Öffnungen (7-1, 7-2, 7-3) des Ventilkörpers (3) und die Anschlüsse (5, 6-1, 6-2, 6-3) des Gehäuses (2) so angeordnet sind, dass
die Einstellachse (A) durch die erste Öffnung (7-1) verläuft und der erste Durchflusskanal (8-1) in Fluidverbindung mit dem zentralen Anschluss (5) steht und
in einer ersten Winkelstellung des Ventilkörpers (3) bezüglich der Einstellachse (A) der zweite Durchflusskanal (8-2) in Fluidverbindung mit einem ersten (6-1) der zumindest drei weiteren Anschlüsse (6-1, 6-2, 6-3) steht und der dritte Durchflusskanal (8-3) in Fluidverbindung mit einem zweiten (6-2) der zumindest drei weiteren Anschlüsse (6-1, 6-2, 6-3) steht.

2. Ventilanordnung (1) nach Anspruch 1,
**dadurch gekennzeichnet, dass**
in einer zweiten Winkelstellung des Ventilkörpers (3) bezüglich der Einstellachse (A) der zweite Durchflusskanal (8-2) in Fluidverbindung mit dem zweiten Anschluss (6-2) und der dritte Durchflusskanal (8-3) in Fluidverbindung mit einem dritten (6-3) der zumindest drei weiteren Anschlüsse (6-1, 6-2, 6-3) steht.

3. Ventilanordnung (1) nach Anspruch 1 oder 2,
**dadurch gekennzeichnet, dass**
in einer dritten Winkelstellung des Ventilkörpers (3) bezüglich der Einstellachse (A) der zweite Durchflusskanal (8-2) in Fluidverbindung mit dem dritten Anschluss (6-3) steht und der dritte Durchflusskanal (8-3) durch den Ventilkörper (3) gesperrt ist.

4. Ventilanordnung (1) nach einem der vorhergehenden Ansprüche
**dadurch gekennzeichnet, dass**
in einer vierten Winkelstellung des Ventilkörpers (3) bezüglich der Einstellachse (A) der zweite Durchflusskanal (8-2) durch den Ventilkörper (3) gesperrt ist und der dritte Durchflusskanal (8-3) in Fluidverbindung mit dem ersten Anschluss (6-1) steht.

5. Ventilanordnung (1) nach einem der vorhergehenden Ansprüche
**dadurch gekennzeichnet, dass**
die Achsen der Durchflusskanäle jeweils senkrecht aufeinander stehen, wobei die Achse des ersten Durchflusskanals (8-1) auf der Einstellachse (A) liegt.

6. Ventilanordnung (1) nach einem der vorhergehenden Ansprüche
**dadurch gekennzeichnet, dass**
der Gehäusehohlraum eine Hohlkugel ist und der Ventilkörper (3) kugelförmig ist, sodass der kugelförmige Ventilkörper (3) dichtend in der von dem Gehäuse (2) gebildeten Hohlkugel sitzt.

7. Ventilanordnung (1) nach einem der Ansprüche 1 bis 5,
**dadurch gekennzeichnet, dass**
der Gehäusehohlraum ein Hohlzylinder ist, dessen Achse mit der Einstellachse (A) zusammenfällt und der Ventilkörper zylinderförmig ist, sodass der zylinderförmige Ventilkörper dichtend in dem von dem Gehäuse gebildeten Hohlzylinder sitzt.

8. Flüssigkeitsaufbereitungsanlage (21) für eine Fahrzeugwaschanlage (20) mit
einem Flüssigkeitsreservoir (22) für die Fahrzeugwaschanlage (20),
einer Sedimentationseinrichtung zum Abscheiden von Sediment und
einer Filtereinrichtung (27) mit einem Einlass (28) und einem Auslass (29),
**gekennzeichnet durch**
ein Ventilsystem, welches in einer ersten Schaltstellung Flüssigkeit von der Sedimentationseinrichtung in den Einlass (28) der Filtereinrichtung (27), durch die Filtereinrichtung (27) und von dem Auslass (29) der Filtereinrichtung (27) in das Flüssigkeitsreservoir (22) leitet und in einer zweiten Schaltstellung Flüssigkeit von der Sedimentationseinrichtung an der Filtereinrichtung (27) vorbei einer Behandlungsanlage (26) zuführt.

9. Flüssigkeitsaufbereitungsanlage (21) nach Anspruch 8,
**dadurch gekennzeichnet, dass**
die Sedimentationseinrichtung ein Sedimentationsbecken (23) und ein Entnahmebecken (25) aufweist, wobei ein Ablauf des Sedimentationsbeckens (23) in Fluidverbindung mit dem Entnahmebecken (25) steht.

10. Flüssigkeitsaufbereitungsanlage (21) nach Anspruch 8 oder 9,
**dadurch gekennzeichnet, dass**
das Ventilsystem eine erste Ventilanordnung (30) nach einem der Ansprüche 1 bis 7 aufweist.

11. Flüssigkeitsaufbereitungsanlage (21) nach einem der Ansprüche 8 bis 10,
**dadurch gekennzeichnet, dass**
der zentrale Anschluss (5) der ersten Ventilanordnung (30) mit dem Einlass der Filtereinrichtung (28) verbunden ist.

12. Flüssigkeitsaufbereitungsanlage (21) nach einem der Ansprüche 8 bis 11,
**dadurch gekennzeichnet, dass**
der erste Anschluss (62-1) der ersten Ventilanordnung (30) mit der Sedimentationseinrichtung, insbesondere mit dem Entnahmebecken (25), verbunden ist,
der zweite Anschluss (62-2) der ersten Ventilanordnung (30) mit der Behandlungsanlage (26) verbunden ist und
der dritte Anschluss (62-3) der ersten Ventilanordnung (30) mit der Sedimentationseinrichtung, insbesondere mit dem Sedimentationsbecken (23), verbunden ist,

13. Flüssigkeitsaufbereitungsanlage (21) nach einem der Ansprüche 8 bis 12,
**dadurch gekennzeichnet, dass**
das Ventilsystem (30) eine zweite Ventilanordnung (31) nach einem der Ansprüche 1 bis 7 aufweist.

14. Flüssigkeitsaufbereitungsanlage (21) nach Anspruch 13,
**dadurch gekennzeichnet, dass**
der zentrale Anschluss (52) der zweiten Ventilanordnung (31) mit dem Auslass (29) der Filtereinrichtung (27) verbunden ist.

15. Flüssigkeitsaufbereitungsanlage (21) nach Anspruch 13 oder 14,
**dadurch gekennzeichnet, dass**
der erste Anschluss (62-1) der zweiten Ventilanordnung (31) mit dem Flüssigkeitsreservoir (22) verbunden ist,
der zweite Anschluss (62-2) der zweiten Ventilanordnung (31) mit der Sedimentationseinrichtung, insbesondere mit dem Sedimentationsbecken (23), verbunden ist,
der dritte Anschluss (62-3) der zweiten Ventilanordnung (31) mit der Sedimentationseinrichtung, insbesondere mit dem Entnahmebecken (25), verbunden ist.
